# EUROPÄISCHE PATENTSCHRIFT

(11) **EP 2 659 541 B1**
(45) Veröffentlichungstag und Bekanntmachung des Hinweises auf die Patenterteilung: **20.07.2016**
(21) Anmeldenummer: 11782109.0
(22) Anmeldetag: 07.11.2011
(51) Int. Cl.: H01M 10/39, H01M 4/38, H01M 10/0562, H01M 6/18

(54) **LITHIUM-SCHWEFEL-ZELLE AUF FESTKÖRPERELEKTROLYTBASIS**
LITHIUM-SULPHUR CELL BASED ON A SOLID ELECTROLYTE
CELLULE AU LITHIUM-SOUFRE À BASE D'ÉLECTROLYTE SOLIDE

(30) Priorität: 29.12.2010 DE 102010064302
(43) Veröffentlichungstag der Anmeldung: 06.11.2013
(73) Patentinhaber: Robert Bosch GmbH, 70442 Stuttgart (DE)
(72) Erfinder: EISELE, Ulrich, 70199 Stuttgart (DE); MOC, Andre, 02779 Grossschoenau (DE); LOGEAT, Alan, 70178 Stuttgart (DE)
(86) Internationale Anmeldenummer: PCT/EP2011/069502
(87) Internationale Veröffentlichungsnummer: WO 2012/089383

(56) Entgegenhaltungen:
- WO-A1-2005/085138
- WO-A1-2010/090301
- DE-A1- 2 810 320
- US-A- 3 404 036
- US-A- 3 953 231

## Beschreibung

Die vorliegende Erfindung betrifft eine Lithium-Schwefel-Zelle, ein Betriebsverfahren für eine Lithium-Schwefel-Zelle sowie die Verwendung einer Lithium-Schwefel-Zelle.

### Stand der Technik

Batterien sind heutzutage sowohl für mobile als auch für stationäre Anwendungen wichtig. Da Lithium-Schwefel-Zellen bei einer geringen Größe eine hohe theoretische spezifische Energiedichte von 2500 Wh/kg erzielen können, sind diese von besonderem Interesse.

Derartige Zellen sind aus der US 3404036 A und der US 3953231 A bekannt. Die DE 2810320 C2 offenbart zudem die Verwendung eines mit Schwefel infiltrierten Festkörperelektrolyten mit ionischer und elektronischer Leitfähigkeit in einer Lithium-Schwefel-Zelle.

### Offenbarung der Erfindung

Gegenstand der vorliegenden Erfindung ist eine Lithium-Schwefel-Zelle, welche eine Anode (negative Elektrode) und eine Kathode (positive Elektrode) umfasst, wobei die Anode Lithium und die Kathode Schwefel umfasst. Die Anode und die Kathode sind dabei durch mindestens einen Lithiumionen leitenden und Elektronen nicht leitenden Festkörperelektrolyten separiert.

Im Sinn der vorliegenden Erfindung kann insbesondere ein Material als Lithiumionen leitend verstanden werden, welches bei 25 °C eine Lithiumionenleitfähigkeit von ≥ 1·10⁻⁶ S/cm aufweist. Als Elektronen nicht leitend kann im Sinn der vorliegenden Erfindung ein Material verstanden werden, welches bei 25 °C eine Elektronenleitfähigkeit von < 1·10⁻⁸ S/cm aufweist.

Eine Separation der Anode und Kathode durch einen Lithiumionen leitenden und Elektronen nicht leitenden Festkörperelektrolyten hat den Vorteil, dass auf diese Weise Kurzschlüsse sowohl bei niedrigen Temperaturen, beispielsweise von weniger als 115 °C, als auch bei hohen Temperaturen, beispielsweise von größer oder gleich als 115 °C, verhindert werden können. Zudem ermöglicht es der Lithiumionen leitende und Elektronen nicht leitende Festkörperelektrolytseparator, eine Lithium-Schwefel-Zelle auf Festkörperbasis zur Verfügung zu stellen, welche insbesondere ausschließlich Festkörperelektrolyten umfasst und damit ohne flüssige und gegebenenfalls entflammbare Elektrolyte betreibbar ist.

Im Rahmen einer Ausführungsform weist der Lithiumionen leitende und Elektronen nicht leitende Festkörperelektrolyt eine Granatstruktur auf. In Lithiumionen leitende und Elektronen nicht leitende Festkörperelektrolyten mit Granatstruktur ist Schwefel vorteilhafterweise nicht oder nur kaum löslich. Zudem sind Lithiumionen leitende und Elektronen nicht leitende Festkörperelektrolyt mit Granatstruktur nicht brennbar und nicht toxisch. Lithiumionen leitende und Elektronen nicht leitende Festkörperelektrolyte mit Granatstruktur haben sich insbesondere zum Betrieb bei hohen Temperaturen als vorteilhaft erwiesen.

Im Rahmen einer weiteren Ausführungsform weist der Lithiumionen leitende und Elektronen nicht leitende Festkörperelektrolyt eine Granatstruktur der allgemeinen Formel:

LiₓA₃B₂O₁₂

auf, wobei 3 ≤ x ≤ 7 ist und A für Kalium, Magnesium, Calcium, Strontium, Barium, Yttrium, Lanthan; Praseodym, Neodym, Samarium, Europium, Gadolinium, Terbium, Dysprosium, Holmium, Erbium, Thulium, Ytterbium und/oder Lutetium und B für Zirkonium, Hafnium, Niob, Tantal, Wolfram, Indium, Zinn, Antimon, Bismut und/oder Tellur steht.

Beispielsweise kann der Lithiumionen leitende und Elektronen nicht leitende Festkörperelektrolyt eine Granatstruktur der Formel: Li₇La₃Zr₂O₁₂ aufweisen.

Im Rahmen einer weiteren Ausführungsform ist die Anode aus metallischem Lithium oder einer Lithiumlegierung, insbesondere aus metallischem Lithium, ausgebildet. So kann vorteilhafterweise eine hohe Maximalspannung erzielt werden. Da Lithium einen Schmelzpunkt von 189 °C aufweist und die Lithium-Schwefel-Zelle sowohl bei niedrigen Temperaturen als auch bei hohen Temperaturen, insbesondere von über 189 °C, betreibbar ist, kann die Lithiumanoden in Abhängigkeit von der Betriebstemperatur sowohl fest als auch flüssig vorliegen.

Die Kathode kann zur Erhöhung der Elektronenleitfähigkeit ein oder mehrere Materialien umfassen, welche beispielsweise ausgewählt sind aus der Gruppe bestehend aus Graphit, Kohlenstoffnanoröhren, Ruß und Lithiumionen und Elektronen leitenden Festkörperelektrolytstrukturen.

Erfindungsgemäss umfasst die Lithium-Schwefel-Zelle, insbesondere kathodenseitig, mindestens einen Lithiumionen und Elektronen leitenden Festkörperelektrolyten. Durch einen, insbesondere kathodenseitigen, Lithiumionen und Elektronen leitenden Festkörperelektrolyten kann vorteilhafterweise die ansonsten dreiphasige Reaktionszone zwischen Elektrolyt, Schwefel und elektrisch leitenden Strukturen auf eine zweiphasige Reaktionszone, nämlich zwischen dem Lithiumionen und Elektronen leitenden Festkörperelektrolyten einerseits und Schwefel andererseits reduziert werden und damit die Reaktionskinetik erhöht werden.

Erfindungsgemäss ist zudem diejenige Seite des Lithiumionen leitenden und Elektronen nicht leitenden Festkörperelektrolyten, welche der Kathode zugewandt ist, mit einer Schicht aus einem Lithiumionen und Elektronen leitenden Festkörperelektrolyten bedeckt. So kann vorteilhafterweise insbesondere die dreiphasige Reaktionszone zwischen Elektrolyt, Schwefel und elektrisch leitenden Strukturen auf eine zweiphasige Reaktionszone, nämlich zwischen dem Lithiumionen und Elektronen leitenden Festkörperelektrolyten einerseits und Schwefel andererseits reduziert werden und damit die Reaktionskinetik erhöht werden .

Alternativen oder zusätzliche kann die Kathode mindestens einen Lithiumionen und Elektronen leitenden Festkörperelektrolyten umfassen. Vorzugsweise ist der Lithium und Elektronen leitende Festkörperelektrolyt dabei mit dem Schwefel infiltriert. Dies hat den Vorteil, dass die Kathode auch bei niedrigen Temperaturen, bei denen Schwefel als Feststoff vorliegt, insbesondere von unter 115 °C, Lithiumionen leitend sein kann. Darüber hinaus kann so vorteilhafterweise auf flüssige und gegebenenfalls entflammbare Elektrolyten verzichtet werden. So kann vorteilhafterweise eine Lithium-Schwefel-Zelle auf Festkörperbasis zur Verfügung gestellt werden.

Im Rahmen einer weiteren Ausführungsform ist die Lithium-Schwefel-Zelle daher eine Lithium-Schwefel-Zelle auf Festkörperelektrolytenbasis beziehungsweise auf Festkörperbasis. Insbesondere kann dabei die Lithium-Schwefel-Zelle keine bei Raumtemperatur (25 °C) flüssigen Elektrolyten und zum Beispiel - mit Ausnahme von gegebenenfalls geschmolzenem Schwefel und/oder Polysulfidenausschließlich Festkörperelektrolyten umfassen. Derartige Lithium-Schwefel-Zellen sind vorteilhafterweise sowohl bei Temperaturen von ≥ 115 °C, beispielsweise ≥ 200 °C, gegebenenfalls ≥ 300 °C als auch bei Temperaturen von < 115 °C betreibbar. Vorteilhafterweise kann bei derartigen Lithium-Schwefel-Zellen auf den Zusatz von flüssigen und gegebenenfalls entflammbaren Elektrolyten verzichtet werden. So kann vorteilhafterweise die Sicherheit und Zyklenstabilität verbessert werden. Zudem kann ein Lithiumionen und Elektronen leitender Festkörperelektrolyt zugleich als Stromleiter fungieren, so dass auf zusätzliche Additive zur Erhöhung der elektrischen Leitfähigkeit verzichtet und die Gesamtenergiedichte der Zelle optimiert werden kann.

Im Rahmen einer weiteren Ausführungsform umfasst die Kathode mindestens ein Leitungselement aus einem Lithiumionen und Elektronen leitenden Festkörperelektrolyten. Über ein derartiges Leitungselement können vorteilhafterweise sowohl Lithiumionen als auch Elektronen zum Schwefelreaktionspartner transportiert werden. Das Leitungselement kann zum Beispiel in Form eines porösen, beispielsweise schwammartigen, Körpers und/oder in Form eines Draht- oder Fasergeflechts, beispielsweise aus Nanodrähten oder -fasern, und/oder in Form von Nanoröhren, ausgebildet sein. Unter Nanodrähten, -fasern beziehungsweise - röhren können dabei insbesondere Drähte oder Fasern oder Röhren mit einem durchschnittlichen Durchmesser von ≤ 500 nm, beispielsweise von ≤ 100 nm, verstanden werden. Es ist jedoch ebenso möglich, dass die Kathode eine Vielzahl von, beispielsweise stab-, platten- oder gitterförmigen, Leitungselementen umfasst.

Im Rahmen einer weiteren Ausführungsform kontaktiert ein Abschnitt des Leitungselements beziehungsweise der Leitungselemente den Lithiumionen leitenden und Elektronen nicht leitenden Festkörperelektrolyten und ein anderer Abschnitt des Leitungselements beziehungsweise der Leitungselemente einen Kathodenstromkollektor. Auf diese Weise kann eine gute Lithiumionen- und Elektronenleitung gewährleistet werden. Beispielsweise kann ein Abschnitt eines, in Form eines porösen Körpers oder Draht- oder Fasergeflechts ausgebildeten Leitungselements den Lithiumionen leitenden und Elektronen nicht leitenden Festkörperelektrolyten und ein anderer Abschnitt des, in Form eines porösen Körpers oder Draht- oder Fasergeflechts ausgebildeten Leitungselements den Kathodenstromkollektor kontaktieren.

Insbesondere kann die Kathode eine Vielzahl von Leitungselementen aus einem Lithiumionen und Elektronen leitenden Festkörperelektrolyten umfassen, von denen jeweils ein Abschnitt den Lithiumionen leitenden und Elektronen nicht leitenden Festkörperelektrolyten und ein anderer Abschnitt den Kathodenstromkollektor kontaktiert. Auf diese Weise kann eine besonders gute Lithiumionen und Elektronenleitung gewährleistet werden. Beispielsweise kann die Kathode eine Vielzahl von ebenen oder gewölbten, zueinander beabstandeten platten- oder gitterförmigen Leitungselementen umfassen, welche jeweils einerseits den Lithiumionen leitenden und Elektronen nicht leitenden Festkörperelektrolyten und andererseits den Kathodenstromkollektor kontaktieren. Die Leitungselemente können dabei zueinander im Wesentlichen parallel angeordnet sein. Beispielsweise können die Leitungselemente ähnlich den Lamellen einer Jalousie bezüglich einander angeordnet sein. Bezüglich des Lithiumionen leitenden und Elektronen nicht leitenden Festkörperelektrolyten und des Kathodenstromkollektors können die Leitungselemente im Wesentlichen senkrecht angeordnet sein.

Im Rahmen einer weiteren Ausführungsform sind auf dem oder den Leitungselement/en Strukturen aus einem Lithiumionen und Elektronen leitenden Festkörperelektrolyten ausgebildet. Durch die Strukturen kann vorteilhafterweise die Oberfläche des Leitungselements und damit die für die Lithium-Schwefel-Redoxreaktion zur Verfügung stehende Fläche vergrößert werden. Bei den Strukturen kann es sich beispielsweise um Strukturen im Bereich von einigen Mikro- oder Nanometern handeln.

Die Leitungselemente und Strukturen können sowohl aus gleichen als auch aus unterschiedlichen Lithiumionen und Elektronen leitenden Festkörperelektrolyten ausgebildet sein. Insbesondere können die Leitungselemente und Strukturen aus dem gleichen Lithium und Elektronen leitenden Festkörperelektrolyten ausgebildet sein.

Im Rahmen einer weiteren Ausführungsform sind die Strukturen durch, beispielsweise nadelförmige, Lithiumionen und Elektronen leitende Festkörperelektrolytkristalle ausgebildet. Derartige Strukturen können beispielsweise durch eine Hydrothermalsynthese auf dem Leitungselement ausgebildet werden beziehungsweise sein.

Im Rahmen einer weiteren Ausführungsform umfasst oder ist der Lithiumionen und Elektronen leitende Festkörperelektrolyt mindestens ein Lithiumtitanat. Unter einem Lithiumtitanat kann im Rahmen der vorliegenden Erfindung sowohl ein reines Lithiumtitanat als auch ein Lithiumtitanat-Mischoxid beziehungsweise ein dotiertes Lithiumtitanat verstanden werden, welches ein oder mehrere Fremdatome (andere Metallkationen als Lithium und Titan), insbesondere Fremdatomoxide, umfasst, insbesondere wobei die Zahl der Fremdatome insgesamt > 0 % bis ≤ 10 %, zum Beispiel > 0 % bis ≤ 1 %, bezogen auf die Zahl der Titanatome, beträgt.

Bei einem Lithiumtitanat-Mischoxid beziehungsweise einem dotierten Lithiumtitanat kann vorteilhafterweise die Lithiumionen- und Elektronenleitfähigkeit durch die Art und Menge an Fremdatomen eingestellt werden.

Insbesondere kann das Lithiumtitanat ein Lithiumtitanat-Mischoxid, beispielsweise Li₄₋ₓMgₓTi₅O₁₂ mit 0 ≤ x ≤ 2 oder 0 ≤ x ≤ 1, und/oder Li₄₋ₓMgₓTi_{5-y}(Nb, Ta)_{y}O₁₂ mit 0 ≤ x ≤ 2 oder 0 ≤ x ≤ 1 und 0 ≤ y ≤ 0,1 oder 0 ≤ y ≤ 0,05, und/oder Li₂₋ₓMgₓTi₃₋y(Nb, Ta)_{y}O₇ mit 0 ≤ x ≤ 1 oder 0 ≤ x ≤ 0,5 und 0 ≤ y ≤ 0,03, umfassen oder sein.

Im Rahmen einer weiteren Ausführungsform umfasst die Kathode mindestens einen Elektronen leitenden (und Lithiumionen nicht leitenden) Feststoff, welcher insbesondere ausgewählt ist aus der Gruppe bestehend aus Graphit, Ruß, Kohlenstoffnanoröhren und Kombinationen davon.

Hinsichtlich weiterer Merkmale und Vorteile der erfindungsgemäßen Lithium-Schwefel-Zelle wird hiermit explizit auf die Erläuterungen im Zusammenhang mit dem erfindungsgemäßen Verfahren, der erfindungsgemäßen Verwendung und der Figurenbeschreibung verwiesen.

Ein weiterer Gegenstand der vorliegenden Erfindung ist ein Verfahren zum Betrieb einer erfindungsgemässen Lithium-Schwefel-Zelle, wobei diese Lithium-Schwefel-Zelle bei einer Temperatur von größer oder gleich 115 °C betrieben wird. Insbesondere ist das Verfahren zum Betrieb einer erfindungsgemäßen Lithium-Schwefelzelle geeignet.

Bei einer Temperatur von 115 °C schmilzt Schwefel und wird somit flüssig, wodurch eine bessere elektrische Kontaktierung der elektrisch leitenden Strukturen, beispielsweise von Graphit, etc. und/oder dem Kathodenstromkollektor, sowie ein besserer Ladungstransport durch Konvektion von in dem Schwefel gelösten Polysulfiden erzielt werden kann. Vorteilhafterweise kann daher auch auf den Zusatz von Lithiumionen leitenden Materialien zum Kathodenmaterial verzichtet werden. Beispielsweise kann die Kathode neben Schwefel nur Zusätze zur Verbesserung der elektrischen Leitfähigkeit, wie Graphit, umfassen, wodurch die Materialkosten vorteilhafterweise reduziert werden können. Zudem kann durch eine Erhöhung der Betriebstemperatur auf über 115 °C die Lithiumionenleitfähigkeit der Festkörperelektrolyten erhöht werden.

In einem Temperaturbereich von 115 °C bis 189 °C ist die Lithiumanode dabei vorteilhafterweise noch fest, weshalb mit einer derartig betriebenen Lithium-Schwefel-Zelle eine höhere Sicherheit erzielt werden kann als mit einer Analogen Natrium-Schwefel-Zelle (Schmelzpunkt von Natrium = 98 °C).

Im Rahmen einer weiteren Ausführungsform wird die Lithium-Schwefel-Zelle daher in einem Temperaturbereich von ≥ 115 °C bis ≤ 189 °C betrieben.

Im Rahmen einer anderen weiteren Ausführungsform wird die Lithium-Schwefel-Zelle jedoch bei einer Temperatur von größer oder gleich 200 °C, gegebenenfalls von größer oder gleich 300 °C, betrieben. So kann vorteilhafterweise die Lithiumionenleitfähigkeit der Lithiumionen leitenden Festkörperelektrolyten sowie des Schwefels weiter erhöht werden.

Hinsichtlich weiterer Merkmale und Vorteile des erfindungsgemäßen Verfahrens wird hiermit explizit auf die Erläuterungen im Zusammenhang mit der erfindungsgemäßen Lithium-Schwefel-Zelle, deren Verwendung und der Figurenbeschreibung verwiesen.

Ferner betrifft die vorliegende Erfindung die Verwendung einer erfindungsgemäßen Lithium-Schwefel-Zelle bei einer Temperatur von größer oder gleich 115 °C, insbesondere von größer oder gleich 200 °C, beispielsweise von größer oder gleich 300 °C.

Hinsichtlich weiterer Merkmale und Vorteile des erfindungsgemäßen Verfahrens wird hiermit explizit auf die Erläuterungen im Zusammenhang mit der erfindungsgemäßen Lithium-Schwefel-Zelle, dem erfindungsgemäßen Verfahren und der Figurenbeschreibung verwiesen.

### Zeichnungen und Beispiele

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen:
- Fig. 1: einen schematischen Querschnitt durch eine erste Ausführungsform einer erfindungsgemäßen Lithium-Schwefel-Zelle; und
- Fig. 2a: einen schematischen Querschnitt durch eine zweite Ausführungsform einer erfindungsgemäßen Lithium-Schwefel-Zelle; und
- Fig. 2b: eine Vergrößerung des in Fig. 2a markierten Bereichs.

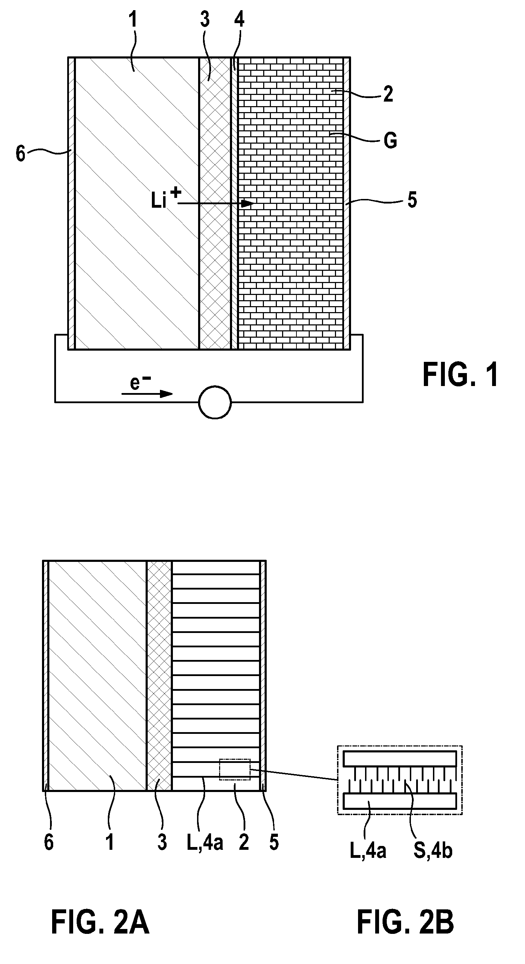

Figur 1 zeigt, eine erste Ausführungsform einer erfindungsgemäßen Lithium-Schwefel-Zelle, welche eine Anode 1 und eine Kathode 2 umfasst, wobei die Anode 1 und die Kathode 2 durch mindestens einen Lithiumionen leitenden und Elektronen nicht leitenden Festkörperelektrolyten 3, beispielsweise mit Granatstruktur, separiert sind. Die Anode 1 kann beispielsweise aus metallischem Lithium ausgebildet sein. Figur 1 veranschaulicht, dass die Kathode 2 neben Schwefel einen Elektronen leitenden Festkörper G, beispielsweise Graphit, umfasst. Eine derartige Lithium-Schwefel-Zelle ist insbesondere für den Betrieb bei Temperaturen von größer oder gleich 115 °C geeignet. Daher kann die in Figur 1 gezeigte Lithium-Schwefel-Zelle auch als Hochtemperatur-Lithium-Schwefel-Zelle bezeichnet werden.

Figur 1 veranschaulicht weiterhin, dass die Lithium-Schwefel-Zelle kathodenseitig, einen Lithiumionen und Elektronen leitenden Festkörperelektrolyten 4, beispielsweise ein Lithiumtitanat, umfasst. Dabei ist erfindungsgemäss diejenige Seite des Lithiumionen leitenden und Elektronen nicht leitenden Festkörperelektrolyten 3, welche der Kathode 2 zugewandt ist, mit einer Schicht 4 aus dem Lithiumionen und Elektronen leitenden Festkörperelektrolyten 4 bedeckt.

Ferner zeigt Figur 1, dass die Anode 1 einen Anodenstromkollektor 6 und die Kathode 2 einen Kathodenstromkollektor 5 aufweist.

Die in den Figuren 2a und 2b gezeigte, nicht erfindungsgemässe Ausführungsform unterscheidet sich im Wesentlichen dadurch von der in Figur 1 gezeigten, ersten Ausführungsform, dass die Lithium-Schwefelzelle keine den Separator 3 abdeckende, Lithiumionen und Elektronen leitende Schicht 4 aufweist und dass die Kathode 2 - anstelle des Elektronen leitenden Festkörpers G - eine Vielzahl von Leitungselementen L aus einem Lithiumionen und Elektronen leitenden Festkörperelektrolyten 4a, beispielsweise einem Lithiumtitanat, umfasst, von denen jeweils ein Abschnitt den Lithiumionen leitenden und Elektronen nicht leitenden Festkörperelektrolyten 3 und ein anderer Abschnitt den Kathodenstromkollektor 5 kontaktiert.

Figur 2b zeigt, dass auf den Leitungselementen L Strukturen S aus einem Lithiumionen und Elektronen leitenden Festkörperelektrolyten 4b ausgebildet sind. Hierbei kann es sich beispielsweise um nadelförmige, Lithiumionen und Elektronen leitende Festkörperelektrolytkristalle, beispielsweise Lithiumtitanatkristalle, handeln. Diese können beispielsweise mittels einer Hydrothermalsynthese auf den Leitungselementen L ausgebildet werden.

Eine derartige Lithium-Schwefel-Zelle ist sowohl für den Betrieb bei Temperaturen von größer oder gleich 115 °C als auch für den Betrieb bei Temperaturen von kleiner 115 °C geeignet. Daher kann die in den Figuren 2a und 2b gezeigte Lithium-Schwefel-Zelle sowohl als Hochtemperatur-Lithium-Schwefel-Zelle als auch als Tieftemperatur-Lithium-Schwefel-Zelle bezeichnet werden.

## Patentansprüche

1. Lithium-Schwefel-Zelle, umfassend
- eine Anode (1), und
- eine Kathode (2),
wobei die Anode (1) Lithium und die Kathode (2) Schwefel umfasst,
wobei die Anode (1) und die Kathode (2) durch mindestens einen Lithiumionen leitenden und Elektronen nicht leitenden Festkörperelektrolyten (3) separiert sind, wobei die Lithium-Schwefel-Zelle, insbesondere kathodenseitig, mindestens einen Lithiumionen und Elektronen leitenden Festkörperelektrolyten (4, 4a, 4b) umfasst, dadurch charakterisiert, dass diejenige Seite des Lithiumionen leitenden und Elektronen nicht leitenden Festkörperelektrolyten (3), welche der Kathode (2) zugewandt ist, mit einer Schicht (4) aus einem Lithiumionen und Elektronen leitenden Festkörperelektrolyten bedeckt ist.

2. Lithium-Schwefel-Zelle nach Anspruch 1, wobei der Lithiumionen leitende und Elektronen nicht leitende Festkörperelektrolyt (3) eine Granatstruktur aufweist.

3. Lithium-Schwefel-Zelle nach Anspruch 1 oder 2, wobei der Lithiumionen leitende und Elektronen nicht leitende Festkörperelektrolyt (3) eine Granatstruktur der allgemeinen Formel:
LiₓA₃B₂O₁₂
aufweist, wobei 3 ≤ x ≤ 7 ist und A für Kalium, Magnesium, Calcium, Strontium, Barium, Yttrium, Lanthan; Praseodym, Neodym, Samarium, Europium, Gadolinium, Terbium, Dysprosium, Holmium, Erbium, Thulium, Ytterbium und/oder Lutetium und B für Zirkonium, Hafnium, Niob, Tantal, Wolfram, Indium, Zinn, Antimon, Bismut und/oder Tellur steht.

4. Lithium-Schwefel-Zelle nach einem der Ansprüche 1 bis 3, wobei die Anode (1) aus metallischem Lithium oder einer Lithiumlegierung ausgebildet ist.

5. Lithium-Schwefel-Zelle nach einem der Ansprüche 1 bis 4, wobei die Kathode (2) mindestens ein Leitungselement (L) aus einem Lithiumionen und Elektronen leitenden Festkörperelektrolyten (4a), insbesondere wobei auf dem oder den Leitungselement/en (L) Strukturen (S) aus einem Lithiumionen und Elektronen leitenden Festkörperelektrolyten (4b) ausgebildet sind, insbesondere wobei die Strukturen (S) durch, beispielsweise nadelförmige, Lithiumionen und Elektronen leitende Festkörperelektrolytkristalle (4b) ausgebildet sind.

6. Lithium-Schwefel-Zelle nach Anspruch 5, wobei ein Abschnitt des Leitungselements (L) den Lithiumionen leitenden und Elektronen nicht leitenden Festkörperelektrolyten (3) und ein anderer Abschnitt des Leitungselements (L) einen Kathodenstromkollektor (5) kontaktiert.

7. Lithium-Schwefel-Zelle nach einem der Ansprüche 1, 5 oder 6, wobei der Lithiumionen und Elektronen leitende Festkörperelektrolyt (4,4a,4b) ein Lithiumtitanat umfasst.

8. Lithium-Schwefel-Zelle nach einem der Ansprüche 1 bis 7, wobei die Lithium-Schwefel-Zelle eine Lithium-Schwefel-Zelle auf Festkörperelektrolytenbasis (3,4,4a,4b) ist, insbesondere welche keine bei Raumtemperatur flüssigen Elektrolyten umfasst.

9. Lithium-Schwefel-Zelle nach einem der Ansprüche 1 bis 8, wobei die Kathode mindestens einen Elektronen leitenden Feststoff (G) umfasst, welcher insbesondere ausgewählt ist aus der Gruppe bestehend aus Graphit, Ruß, Kohlenstoffnanoröhren und Kombinationen davon.

10. Verfahren zum Betrieb einer Lithium-Schwefel-Zelle nach einem der Ansprüche 1 bis 9, wobei die Lithium-Schwefel-Zelle bei einer Temperatur von größer oder gleich 115 °C betrieben wird.

11. Verfahren nach Anspruch 10, wobei die Lithium-Schwefel-Zelle in einem Temperaturbereich von ≥ 115 °C bis ≤ 189 °C betrieben wird.

12. Verfahren nach Anspruch 11, wobei die Lithium-Schwefel-Zelle bei einer Temperatur von größer oder gleich 200 °C, insbesondere von größer oder gleich 300 °C, betrieben wird.

13. Verwendung einer Lithium-Schwefel-Zelle nach einem der Ansprüche 1 bis 9 bei einer Temperatur von größer oder gleich 115 °C, insbesondere von größer oder gleich 200 °C, beispielsweise von größer oder gleich 300 °C.

## Claims

1. Lithium-sulphur cell, comprising:
- an anode (1), and
- a cathode (2),
wherein the anode (1) comprises lithium and the cathode (2) comprises sulphur,
wherein the anode (1) and the cathode (2) are separated by at least one lithium-ion-conducting and electron-nonconducting solid electrolyte (3), wherein the lithium-sulphur cell comprises, in particular on the cathode side, at least one lithium-ion and electron-conducting solid electrolyte (4, 4a, 4b), **characterized in that** the side of the lithium-ion-conducting and electron-nonconducting solid electrolyte (3) that is facing the cathode (2) is covered with a layer (4) of a lithium-ion and electron-conducting solid electrolyte.

2. Lithium-sulphur cell according to Claim 1, wherein the lithium-ion-conducting and electronnonconducting solid electrolyte (3) has a garnet structure.

3. Lithium-sulphur cell according to Claim 1 or 2, wherein the lithium-ion-conducting and electronnonconducting solid electrolyte (3) has a garnet structure of the general formula:
LiₓA₃B₂O₁₂,
where 3 ≤ x ≤ 7 and A stands for potassium, magnesium, calcium, strontium, barium, yttrium, lanthanum, praseodymium, neodymium, samarium, europium, gadolinium, terbium, dysprosium, holmium, erbium, thulium, ytterbium and/or lutetium and B stands for zirconium, hafnium, niobium, tantalum, tungsten, indium, tin, antimony, bismuth and/or tellurium.

4. Lithium-sulphur cell according to one of Claims 1 to 3, wherein the anode (1) is formed from metallic lithium or a lithium alloy.

5. Lithium-sulphur cell according to one of Claims 1 to 4, wherein the cathode (2) comprises at least one conducting element (L) of a lithium-ion and electron-conducting solid electrolyte (4a), in particular wherein structures (S) of a lithium-ion and electron-conducting solid electrolyte (4b) are formed on the conducting element(s) (L), in particular wherein the structures (S) are formed by, for example needle-shaped, lithium-ion and electron-conducting solid electrolyte crystals (4b).

6. Lithium-sulphur cell according to Claim 5, wherein one portion of the conducting element (L) contacts the lithium-ion-conducting and electronnonconducting solid electrolyte (3) and another portion of the conducting element (L) contacts a cathode current collector (5).

7. Lithium-sulphur cell according to one of Claims 1, 5 or 6, wherein the lithium-ion and electron-conducting solid electrolyte (4, 4a, 4b) comprises a lithium titanate.

8. Lithium-sulphur cell according to one of Claims 1 to 7, wherein the lithium-sulphur cell is a lithium-sulphur cell based on a solid electrolyte (3, 4, 4a, 4b), in particular which does not comprise an electrolyte that is liquid at room temperature.

9. Lithium-sulphur cell according to one of Claims 1 to 8, wherein the cathode comprises at least one electron-conducting solid (G), which is in particular selected from the group consisting of graphite, carbon black, carbon nanotubes and combinations thereof.

10. Method for operating a lithium-sulphur cell according to one of Claims 1 to 9, wherein the lithium-sulphur cell is operated at a temperature of greater than or equal to 115°C.

11. Method according to Claim 10, wherein the lithiumsulphur cell is operated in a temperature range ≥ 115°C to ≤189°C.

12. Method according to Claim 11, wherein the lithium-sulphur cell is operated at a temperature of greater than or equal to 200°C, in particular of greater than or equal to 300°C.

13. Use of a lithium-sulphur cell according to one of Claims 1 to 9 at a temperature of greater than or equal to 115°C, in particular of greater than or equal to 200°C, for example of greater than or equal to 300°C.

## Revendications

1. Cellule au lithium-soufre, comprenant
- une anode (1), et
- une cathode (2),
dans laquelle l'anode (1) comprend du lithium et la cathode (2) contient du soufre,
dans laquelle l'anode (1) et la cathode (2) sont séparées par au moins un électrolyte solide (3) conducteur des ions lithium et non conducteur des électrons, dans laquelle la cellule au lithium-soufre comprend, au moins du côté cathode, au moins un électrolyte solide (4, 4a, 4b) conducteur des ions lithium et des électrons, **caractérisée en ce que** le côté de l'électrolyte solide (3) conducteur des ions lithium et non conducteur des électrons, qui est tourné vers la cathode (2), est recouvert d'une couche (4) en un électrolyte solide conducteur des ions lithium et des électrons.

2. Cellule au lithium-soufre selon la revendication 1, dans laquelle l'électrolyte solide (3) conducteur des ions lithium et non conducteur des électrons présente une structure de grenat.

3. Cellule au lithium-soufre selon la revendication 1 ou 2, dans laquelle l'électrolyte solide (3) conducteur des ions lithium et non conducteur des électrons présente une structure de grenat de la formule générale
LiₓA₃B₂O₁₂,
dans laquelle 3 ≤ x ≤ 7, A représente le potassium, le magnésium, le calcium, le strontium, le baryum, l'yttrium, le lanthane; le praséodyme, le néodyme, le samarium, l'europium, le gadolinium, le terbium, le dysprosium, le holmium, l'erbium, le thulium, l'ytterbium et/ou le lutétium, et B représente le zirconium, le hafnium, le niobium, le tantale, le tungstène, l'indium, l'étain, l'antimoine, le bismuth et/ou le tellure.

4. Cellule au lithium-soufre selon l'une quelconque des revendications 1 à 3, dans laquelle l'anode (1) est constituée de lithium métallique ou d'un alliage de lithium.

5. Cellule au lithium-soufre selon l'une quelconque des revendications 1 à 4, dans laquelle la cathode (2) comprend au moins un élément de conduite (L) en un électrolyte solide (4a) conducteur des ions lithium et des électrons, en particulier dans laquelle des structures (S) en un électrolyte solide (4b) conducteur des ions lithium et des électrons sont formées sur le ou les élément (s) de conduite (L), en particulier dans laquelle les structures (S) sont formées par des cristaux d'électrolyte solide aciculaires (4b) conducteurs des ions lithium et des électrons.

6. Cellule au lithium-soufre selon la revendication 5, dans laquelle une partie de l'élément de conduite (L) contacte l'électrolyte solide (3) conducteur des ions lithium et non conducteur des électrons et une autre partie de l'élément de conduite (L) contacte un collecteur de courant cathodique (5).

7. Cellule au lithium-soufre selon l'une quelconque des revendications 1, 5 ou 6, dans laquelle l'électrolyte solide (4, 4a, 4b) conducteur des ions lithium et des électrons comprend un titanate de lithium.

8. Cellule au lithium-soufre selon l'une quelconque des revendications 1 à 7, dans laquelle la cellule au lithium-soufre est une cellule au lithium-soufre à base d'électrolyte solide (3, 4, 4a, 4b), en particulier qui ne contient aucun électrolyte liquide à la température ambiante.

9. Cellule au lithium-soufre selon l'une quelconque des revendications 1 à 8, dans laquelle la cathode comprend au moins une substance solide (G) conductrice des électrons, qui est choisie en particulier dans le groupe composé du graphite, de la suie, de nanotubes de carbone et de combinaisons de ceux-ci.

10. Procédé pour faire fonctionner une cellule au lithium-soufre selon l'une quelconque des revendications 1 à 9, dans lequel la cellule au lithium-soufre fonctionne à une température supérieure ou égale à 115°C.

11. Procédé selon la revendication 10, dans lequel la cellule au lithium-soufre fonctionne dans une plage de température de ≥ 115°C à ≤ 189°C.

12. Procédé selon la revendication 11, dans lequel la cellule au lithium-soufre fonctionne à une température supérieure ou égale à 200°C, en particulier supérieure ou égale à 300°C.

13. Utilisation d'une cellule au lithium-soufre selon l'une quelconque des revendications 1 à 9 à une température supérieure ou égale à 115°C, en particulier supérieure ou égale à 200°C, par exemple supérieure ou égale à 300°C.
